Europäisches Patentamt

(19) European Patent Office

Office européen des brevets

(11) Publication number: **0 049 128**
A1

## (12) EUROPEAN PATENT APPLICATION

(21) Application number: 81304437.7

(22) Date of filing: 25.09.81

(51) Int. Cl.³: **H 02 K 3/30, H 01 F 27/32**

(30) Priority: 27.09.80 JP 135023/80

(43) Date of publication of application: 07.04.82
Bulletin 82/14

(84) Designated Contracting States: **AT BE CH DE FR GB IT LI LU NL SE**

(71) Applicant: **Hitachi, Ltd., 5-1, Marunouchi 1-chome, Chiyoda-ku Tokyo 100 (JP)**

(72) Inventor: **Hakamada, Takeshi, 27-14 Nishinarusawacho-4-chome, Hitachi-shi (JP)**

(74) Representative: **Ellis, Edward Lovell et al, MEWBURN ELLIS & CO. 2/3 Cursitor Street, London EC4A 1BQ (GB)**

(54) Insulated electrical coil.

(57) An insulated electrical coil produced by wrapping around an electrical conductor special mica sheet treated with a coupling agent, e.g. an aminosilane or a silane monomer, to form an insulation layer of a plurality of mica sheet layers, impregnating said mica sheet layers with a solventless varnish, and curing the resulting resin impregnated into the mica sheet layers. The insulated electrical coil thus manufactured has improved dielectric breakdown strength and heat resistance.

EP 0 049 128 A1

## INSULATED ELECTRICAL COIL

This invention relates to an insulated electrical coil, particularly to that with mica insulation suitable for improving voltage resistance and a process for production thereof.

A mica insulation impregnated with a solventless varnish or resin is generally used for high voltage insulation. As the mica, mica flakes were mainly used, but in recent years, the use of reconstituted mica such as mica paper becomes predominantly. As a binder for mica, an organic solvent type varnish has been used. As the solventless varnish for inpregnation, there have been used polyesters, epoxy resins, and the like. Such a high voltage mica insulation has some problems in heat resistance and in electrical properties, e.g., dielectric breakdown strength. Such problems are caused by a binder for mica particles in an amount of, for instance 10 to 25% by weight based on the weight of the mica sheet. The binder may impair the impregnation of a solventless varnish, on one hand, which results in decreasing heat resistance and electrical properties. On the other hand, the binder tends to impair heat resistance of the impregnated varnish which should have heat resistance of rated operating temperature as high as 220°C, because the binder has generally heat resistance of about

155°C at most.

In order to solve such problems, it may be useful to employ mica sheet containing no binder therein, e.g., mica paper produced from small mica particles in a paper making process by using only water (hereinafter referred to as "mica paper C"), but such a mica sheet is brittle and difficult in winding said sheet around electrical conductors. In order to increase mechanical strength of mica paper C, it is possible to reinforce mica paper C with other materials, but the resulting mica paper C as well as the original mica paper C absorbs much more moisture than does conventional one, which impair properties of a cured solventless varnish and in lowering electrical properties, particularly dielectric breakdown properties, of insulated coil after curing the impregnated varnish.

This invention provides an insulated electrical coil comprising an electrical conductor and an insulation layer of a plurality of mica sheet layers wrapped around said conductor, said mica sheet layers being bound by a cured resin impregnated thereinto, characterized in that said mica sheet is treated with a coupling agent prior to the impregnation with the resin.

This invention also provides a process for producing an insulated electrical coil which comprises wrapping mica sheet treated with a coupling agent around an electrical conductor to form an insulation layer of a plurality of mica sheet layers, impregnating the mica sheet layers with a solventless varnish, and curing the resulting resin impregnated into the mica sheet layers.

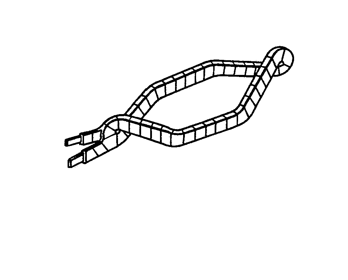

The attached drawing is a rough sketch of one example of insulated electrical coil according to this invention.

The mica sheet used in this invention should be treated with a coupling agent prior to the impregnation with a solventless varnish.

As the mica sheet, there can be used conventional one, but the use of reconstituted mica in the form of sheet such as mica paper is more preferable taking permeability of a solventless varnish thereinto into consideration. Mica paper is generally produced by treating ground mica particles usually 0.1 to 2 mm long and 0.1 to 10 $\mu$m thick using water in a paper making process. Since mica originally has hydroxyl groups on the surface and strong polarity, it is easily wetted with a material having strong polarity such as water. In fact, the mica paper undesirably adsorbs moisture or water during storage or before the production of insulated coils so as to give bad influences on chemical and physical properties of the solventless varnish to be impregnated. In order to remove such bad influences, it is necessary to treat the mica paper with a coupling agent prior to the impregnation with a solventless varnish.

The coupling agent is a compound which can be condensed with mica by hydrolysis by the surface treatment of mica and is quite different from conventional binders. Examples of the coupling agent are aminosilane coupling agents such as γ-aminopropyltriethoxysilane, n-β-aminoethyl-γ-aminopropyltrimethoxysilane, etc.; silane (monomer) coupling agents such as methyltrichlorosilane, dimethyldichlorosilane, γ-chloropropyltriethoxysilane, vinyltrichlorosilane, vinyltriethoxysilane, vinyltris(β-methoxyethoxy)silane, γ-methacryloxypropyltrimethoxysilane, β-(3,4-epoxycyclohexyl)ethyltrimethoxysilane, γ-glycidoxypropyltrimethoxysilane, vinyltriacetoxysilane, γ-mercaptopropyltrimethoxysilane, etc. These coupling agents can be used alone or as a mixture thereof.

As the treating method of mica paper with the coupling agent, there can be employed (i) a method of dipping mica particles in a solution of coupling agent at the time of paper making process, (ii) a method of spraying a solution of coupling agent over mica paper after produced by the paper making process, and (iii) a method of dipping mica paper in the form of tape in a solution of coupling agent. Among these methods, the methods (ii) and (iii) are more convenient for evaporating a solvent such as an alcoholic solvent in the later drying step.

The amount of coupling agent to be added to the mica paper is preferably 0.03 to 0.15% by weight

- 5 -                    0049128

based on the weight of mica paper.  If the amount of coupling agent is too much, flexibility of mica paper tape will be lost, which results in making the taping operation difficult.

As a solvent or diluent for the coupling agent, there can be used benzene, toluene, methyl ethyl ketone, alcohols and the like.

Since the mica sheet, particularly mica paper is treated with a coupling agent prior to the impregnation with a solventless varnish in the present invention, the amount of binder for binding mica particles conventionally used can be reduced remarkably, for example, about a half or less, and sometimes no binder is used when the mica paper is reinforced with a fibrous material.  Further, since the amount of binder for binding mica particles is reduced remarkably or sometimes no binder is used, the mica sheet, particularly mica paper treated with a coupling agent becomes to have an increased permeability of a solventless varnish.

For example, in the case of mica paper C produced by using only water in the paper making process as mentioned above, the resulting mica C paper is poor in mechanical strength when no conventional binder is used.  If a conventional binder is used for increasing the mechanical strength of mica paper C as in a conventional manner, the permeability of a solventless varnish is not increased but decreased undesirably.

But when the mica paper C is treated with a coupling agent according to this invention, the amount of the binder can be reduced as small as possible, which results in providing good mechanical strength as well as an increased permeability of a solventless varnish.

Another method of increasing mechanical strength of mica paper C containing little or no binder is to mix a reinforcing material such as fibrous materials, e.g., pulp, glass fibers, short fibers of aromatic polyamides, polyesters and the like, with ground mica particles in the paper making process. But when pulp or polyesters are used, the resulting mica paper is not so excellent in heat resistance and when glass fibers are used, the resulting mica paper is not so good in bending strength. Therefore, considering both heat resistance and mechanical strength (e.g., bending strength), aromatic polyamides are the best among the fibrous materials mentioned above. Hereinafter, mica paper mixed with aromatic polyamide fibrids (the term "fibrids" means pulp-like shart fibers) is referred to as "mica paper A" and that mixed with pulp is referred to as "mica paper B".

The fibrous material can be mixed with mica particles in an amount of upto 100% by weight, but considering reinforcement of mica paper, it is preferable to mix the fibrous material in an amount of 5 to 10% by weight based on the weight of the mica particles. When the mica paper is reinforced with a fibrous material, it is not necessary to use a conventional binder, but a small amount of binder may be present in the mica paper so long as the binder does not impair the impregnation of a solventless varnish. The resulting mica paper is uniform in thickness, which results in increasing dielectric breakdown strength.

The mica paper treated with a coupling agent is wrapped around an electric conductor to form an insulation layer of a plurality of mica paper layers. The conductor wrapped with the mica tape is then impregnated with a solventless varnish.

As the solventless varnish, there can be used those having good heat resistance such as phenolic resins, polyester resins, epoxy resins, silicone resins, polyimide resins, and the like. When excellent heat resistance is required, thermosetting resins obtained by mixing a polyfunctional isocyanate and a polyfunctional epoxide as disclosed in U.S. Patent No. 4,070,416 can preferably be used.

The impregnation of a solventless varnish can be carried out by a conventional method, e.g., vacuum impregnation followed by pressing for removing voids. The resin impregnated into mica paper layers is then cured by a conventional process to give insulated coils.

This invention is illustrated by way of the following Examples.

Example 1

Mica paper A obtained by mixing about 5% by weight of aromatic polyamide fibrids with small mica particles in the paper making process using water was used (such mica paper A being available comercially, e.g., "A mica" produced by Nippon Aroma K.K., Japan). The mica paper A was treated with an alcohol solution of coupling agent γ-aminopropyl-triethoxysilane (Aminosilane A-1100 manufactured by UCC in U.S.) (hereinafter referred to as "coupling agent P") by dipping the mica paper A therein. The added amount of the coupling agent to the mica paper A was 0.08% by weight. The coupling agent-treated mica paper A was dried and wrapped around an electric conductor, followed by impregnation with a solventless varnish (a mixture of polyfunctional isocyanate and polyfunctional epoxide, hereinafter referred to as "resin K") by vacuum impregnation followed by pressing for removing voids and curing of the impregnated resin to give an insulated coil. Properties of the insulated coil were tested and listed in Table 1.

Example 2

The procedures of Example 1 were repeated except for using mica paper B (containing pulp in place of aromatic polyamide fibrids).

Properties of the resulting insulated coil

0049128

were tested and listed in Table 1.


Example 3

The procedures of Example 1 were repeated except for using mica paper C (containing no aromatic polyamide fibrids).

Properties of the resulting insulated coil were tested and listed in Table 1.


Example 4

The procedures of Example 1 were repeated except for using a mixture of dimethyldichlorosilane and methyltrichlorosilane (Dri-Film SC-77 manufactured by General Electric Co., Ltd., in U.S.) (hereinafter referred to as "coupling agent Q") in place of coupling agent P, and toluene as a solvent.

Properties of the resulting insulated coil were tested and listed in Table 1.


Example 5

The procedures of Example 1 were repeated except for using cycloaliphatic epoxy resin (UNOX 206 or 201, manufactured by UCC in U.S.) together with a curing agent, methyl-endo-bicyclo-(2,2,1)-5-heptene-2,3-dicarboxylic anhydride (MHAC-P, manufactured by Hitachi Chemical Co., Ltd., in Japan) (reherinafter referred to as "resin L") in place of resin K.

Properties of the resulting insulated coil were tested and listed in Table 1.

Example 6

The procedures of Example 1 were repeated except for using glycidyl ester type epoxy resin (CY 192 manufactured by Ciba Ltd., or HR 720 manufactured by Hitachi Chemical Co., Ltd.) together with a curing agent, methyltetrahydrophthalic acid anhydride (HY 917 manufactured by Ciba Ltd., or HN 2000 manufactured by Hitachi Chemical Co., Ltd.) (hereinafter referred to as "resin M") in place of resin K.

Properties of the resulting insulated coil were tested and listed in Table 1.

Comparative Example 1

The procedures of Example 1 were repeated except for using mica paper D (obtained by using a silicone varnish as a binder for small mica particles in an amount of 20% by weight based on the weight of mica paper) in place of mica paper A without treatment with the coupling agent.

Properties of the resulting insulated coil were tested and listed in Table 1.

Comparative Example 2

The procedures of Comparative Example 1 were repeated except for treating mica paper D with the coupling agent P (the added amount being 0.08% by

0049128

weight based on the weight of mica paper D).

Properties of the resulting insulated coil were tested and listed in Table 1.

Comparative Example 3

The procedures of Comparative Example 1 were repeated except for using resin L in place of resin K.

Properties of the resulting insulated coil were tested and listed in Table 1.

Comparative Example 4

The procedures of Comparative Example 3 were repeated except for treating mica paper D with the coupling agent P (the added amount being 0.08% by weight based on the weight of mica paper D).

Properties of the resulting insulated coil were tested and listed in Table 1.

Comparative Example 5

The procedures of Example 1 were repeated except for not treating the mica paper A with the coupling agent P.

Properties of the resulting insulated coil were tested and listed in Table 1.

Comparative Example 6

The procedure of Example 5 were repeated except for not treating the mica paper A with the coupling agent P.

Properties of the resulting insulated coil were tested and listed in Table 1.

Table 1

| No. | Insulation constituents | | | Tape wrapping properties | Resin content (% by wt.) | Dielectric breakdown strength *1 (KV/mm) | Thermal deterioration rate of dielectric breakdown strength *2 (%) |
|---|---|---|---|---|---|---|---|
| | Mica paper | Coupling agent | Impregnated resin | | | | |
| Example | | | | | | | |
| 1 | A | P | K | Good | 42 | 45 | 18 |
| 2 | B | P | K | Almost good | 40 | 43 | 40 |
| 3 | C | P | K | Not easy | 41 | 40 | 19 |
| 4 | A | Q | K | Good | 38 | 41 | 22 |
| 5 | A | P | L | " | 42 | 45 | 25 |
| 6 | A | P | M | " | 41 | 42 | 32 |
| Comparative Example | | | | | | | |
| 1 | D | – | K | Good | 27 | 24 | 25 |
| 2 | D | P | K | " | 30 | 27 | 24 |
| 3 | D | – | L | " | 30 | 30 | 30 |
| 4' | D | P | L | " | 33 | 34 | 28 |
| 5 | A | – | K | " | 31 | 32 | 20 |
| 6 | A | – | L | " | 37 | 38 | 26 |

Note) *1: Dielectric breakdown strength was measured by a rapid increment of voltage at a rate of 1 KV/sec.

*2: Thermal deterioration rate of dielectric breakdown strength was obtained by calculating the formula:

$$\frac{V_{BD_1} - V_{BD_2}}{V_{BD_1}} \times 100 \, (\%)$$, wherein $V_{BD_1}$ is dielectric breakdown strength at an initial time and $V_{BD_2}$ is dielectric breakdown strength after aged for 40 days at $240^{\circ}C$.

In the above Examples and Comparative Examples, chemical names of the trade names are as follows:

UNOX 206:   Vinylcyclohexene dioxide-{4-(1,2-epoxyethyl)-1,2-epoxycyclohexane}

UNOX 201:   3,4-Epoxy-6-methylcyclohexylmethyl-4-epoxy-6-methylcyclohexane carboxylate

CY 192:   3,4-Epoxycyclohexylmethyl-(3,4-epoxy)cyclohexane carboxylate

HR 720:   Bis(1,2-epoxypropyl methyltetra-hydrophthalate)

Insulation constituents used in Comparative Examples 1 and 3 are most generally used ones according to conventional techniques. Since the mica paper D contains 20% by weight of the organic solvent type

varnish as a binder, the resin contents are as low as 27% and 30% by weight, which results in giving lower values of 24 and 30 KV/mm in dielectric breakdown strength and relatively larger values of 25% and 30% in thermal deterioration rate of dielectric breakdown strength.

In Comparative Examples 5 and 6, the mica paper A is used in order to remove the influence of the binder from the mica paper D. The resin contents are increased in 4% by weight and 7% by weight, respectively and accordingly dielectric breakdown strength is increased, particularly the thermal deterioration rate is improved remarkably in Comparative Examples 5 and 6 compared with Comparative Examples 1 and 3. But compared with the weight loss of 20% by weight of the binder in the mica paper, the increase in the resin contents is only 4% and 7% by weight in Comparative Examples 5 and 6. This seems to be that adsorbed amount of water in mica paper is increased by the removal of the binder and the water is vaporized by the heating at the curing of the resin K or L and expels a portion of the resin. Particularly in Comparative Example 5, the resin content is increased in only 4% by weight compared with that of Comparative Example 1. This seems that the adsorbed water reacts with the isocyanate in the resin K to produce $CO_2$ gas and expels the resin much more.

In Examples 1 and 5, the mica paper A is used as in Comparative Examples 5 and 6 but the mica paper A is treated with the coupling agent P. The resin contents are increased in 15% and 12% by weight compared with those in Comparative Examples 1 and 3 to give each 42% by weight, indicating that impregnation with resin is improved remarkably. This seems that by the treatment with the coupling agent, the coupling agent reacts with adsorbed water on the surface of mica paper or the silanol groups on its surface to form a film having strong water repellency over the mica paper surface. Needless to say, dielectric breakdown strength is also improved in Examples 1 and 5.

As to the thermal deterioration rate, that of Example 1 is better than that of Example 5 when compared Examples 1 and 5. This seems that the resin K is particularly excellent in heat resistance. Even if the resin K is used, when the mica tape A is not treated with the coupling agent P, dielectric breakdown strength after thermal deterioration is, as shown in Comparative Example 5:

$$32 \text{ KV/mm} \times (1 - 0.20) = 25.6 \text{ KV/mm}$$

which value is the same or slightly lower than that of Comparative Example 6, wherein the resin L is used, after thermal deterioration, that is,

$$38 \text{ KV/mm} \times (1 - 0.26) = 28.1 \text{ KV/mm}$$

As shown above, in order to exhibit excellent heat resistance of the resin K sufficiently, it is necessary to use mica paper not only treated with a coupling agent but also containing no organic solvent type varnish as a binder, that is, having an increased permeability of a solventless varnish.

In Examples 2 and 3, the mica paper B and the mica paper C are used in place of the mica paper A. As shown in Table 1, the values of resin content and dielectric breakdown strength are almost the same as those of Example 1. The effect of treatment of mica paper containing no binder with a coupling agent is the same as in Example 1. The tape wrapping properties of mica paper C of Example 3 can easily be improved by mixing a very small amount of a conventional binder in the paper making process.

In Example 4, the coupling agent Q is used in place of the coupling agent P. Although the values of resin content, dielectric breakdown strength and thermal deterioration rate of dielectric breakdown strength are slightly inferior to those of Example 1 but by far superior to those of Comparative Examples 1 and 5; this clearly shows the effect of coupling agent.

In Comparative Examples 2 and 4, the mica paper D containing the organic solvent type varnish as binder is treated with the coupling agent P, but the effect of the coupling agent treatment is not so great as that shown in Examples 1 and 5 wherein no binder is used in the mica paper.

As mentioned above, the insulated coils obtained by this invention are increased in dielectric breakdown strength and improved in heat resistance to the level of heat resistance of the impregnated resin. Further, since the impregnated resin content is also imcreased in this invention, mechanical strength of the resulting insulated coil is also improved.

Further, since special mica sheet having an increased permeability of a solventless varnish and being treated with a coupling agent is used in this invention, there brings about no adsorption of moisture on the surface of mica paper, which results in exhibiting sufficiently the properties of impregnated solventless varnish and improving dielectric breakdown strength. Thus insulated coils good in dielectric breakdown strength without influence of adsorbed moisture can be obtained according to this invention.

CLAIMS:-

1.     An insulated electrical coil comprising an electrical conductor and an insulation layer of a plurality of mica sheet layers wrapped around said conductor, said mica sheet layers being bound by a cured resin impregnated thereinto, characterized in that said mica sheet is treated with a coupling agent prior to the impregnation with the resin.

2.     An insulated electrical coil comprising an electrical conductor and an insulation layer of a plurality of mica sheet layers wrapped around said conductor, said mica sheet layers being bound by a cured resin impregnated thereinto, characterized in that said mica sheet is treated with a coupling agent prior to the impregnation with the resin and has an increased permeability of a solventless varnish.

3.     An insulated electrical coil according to claim 1 or 2, characterized in that the mica sheet is mica paper obtained from small mica particles using water in a paper making process.

4.     An insulated electrical coil according to claim 3, characterized in that the mica paper is reinforced with a fibrous material.

5.     An insulated electrical coil according to claim 4, characterized in that the fibrous material is aromatic polyamide fibrids.

6.      An insulated electrical coil according to claim 4,
        characterized in that the fibrous material is
pulp.

7.      An insulated electrical coil according to claim 1
or 2, characterized in that the coupling agent is an
aminosilane or a silane monomer.

8.      An insulated electrical coil according to claim 7,
characterized in that the coupling agent is $\gamma$-aminopropyl-
trimethoxysilane.

9.      An insulated electrical coil according to claim 7,
characterized in that the coupling agent is a mixture of
methyltrichlorosilane and dimethyldichlorosilane.

10.     An insulated electrical coil according to claim 2,
characterized in that the solventless varnish is a mixture
of a polyfunctional isocyanate and a polyfunctional
epoxide.

11.     A process for producing an insulated electrical
coil which including the steps of:

        (a) wrapping mica sheet around an electrical
conductor to form an insulation layer of a plurality of
mica sheet layers;

        (b) impregnating the mica sheet layers with a
solventless varnish; and

        (c) curing the resulting resin impregnated into
the mica sheet layers;
characterized in that it additionally includes the step
of treating the mica sheet with coupling agent prior to the step of impregnation.

12. A process according to claim 11 characterized in that the mica sheet is mica paper obtained from small mica particles using water in a paper making process.

13. A process according to claim 12, characterized in that the mica paper is reinforced with a fibrous material.

14. A process according to claim 11, characterized in that coupling agent is an aminosilane or a silane monomer.

## DOCUMENTS CONSIDERED TO BE RELEVANT

| Category | Citation of document with indication, where appropriate, of relevant passages | Relevant to claim |
|---|---|---|
| X | <u>EP - A1 - 0 012 566</u> (HITACHI)<br>* Claims; page 6, line 8 - page 8, line 15; page 23, example 11 * | 1-14 |
| | <u>JP - A2 - 54-157 295</u> (HITACHI)<br>* Claims; examples *<br>& PATENT ABSTRACTS OF JAPAN, unexamined applications, E-section, vol. 4, no. 8 (E-171), February 13, 1980<br>THE PATENT OFFICE JAPANESE GOVERNMENT<br>page 5 E 171<br>* Kokai-Nr. 54-157 295 (HITACHI) * | 1,2,4,<br>7,11,<br>14 |
| X | <u>DE - A1 - 2 252 509</u> (DYNAMIT)<br>* Page 8, line 19 - page 10, line 13 * | 1,11 |

**CLASSIFICATION OF THE APPLICATION (Int. Cl.³)**

H 02 K   3/30

H 01 F 27/32

**TECHNICAL FIELDS SEARCHED (Int. Cl.³)**

H 02 K   3/00

H 02 K 15/00

H 01 F 27/00

H 01 F 41/00

H 01 B   3/00

B 32 B 19/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| X | The present search report has been drawn up for all claims |
|---|---|

| Place of search | Date of completion of the search | Examiner |
|---|---|---|
| VIENNA | 11-12-1981 | KUTZELNIGG |

EPO Form 1503.1  06.78